(19) Europäisches Patentamt
European Patent Office
Office européen des brevets

(11) **EP 3 147 685 B1**

(12) **EUROPEAN PATENT SPECIFICATION**

(45) Date of publication and mention
of the grant of the patent:
**01.01.2020 Bulletin 2020/01**

(51) Int Cl.:
*G01S 13/34* (2006.01)      *G01S 13/93* (2006.01)
*G01S 7/35* (2006.01)

(21) Application number: **15186291.9**

(22) Date of filing: **22.09.2015**

(54) **A VEHICLE SYNTHETIC APERTURE RADAR SYSTEM**

FAHRZEUGRADARSYSTEM MIT SYNTHETISCHER APERTUR

SYSTÈME DE RADAR À OUVERTURE SYNTHÉTIQUE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.03.2017 Bulletin 2017/13**

(73) Proprietor: **Veoneer Sweden AB
447 83 Vårgårda (SE)**

(72) Inventor: **Schwert, Christian
97437 Hassfurt (DE)**

(74) Representative: **Sandstedt, Jonas Sven James
WESTPATENT AB
Almekärrsvägen 11
443 39 Lerum (SE)**

(56) References cited:
**JP-A- 2003 315 447      US-A1- 2008 150 795
US-A1- 2014 306 840      US-A1- 2015 084 806**

**Description**

The present disclosure relates to a vehicle radar system comprising at least one transceiver arrangement arranged to generate, transmit two FMCW (Frequency Modulated Continuous Wave) chirp signals, and to receive reflected signals.

Many vehicle radar systems comprise means for generating so-called chirp signals that are transmitted, reflected and received by means of appropriate antennas comprised in the radar system. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp. The change in frequency from start to finish, the bandwidth, may for example be of the order of 0.5% of the starting frequency.

The received signals, thus constituted by reflected radar echoes, are mixed with the transmitted chirp signal in order to convert the received signals to baseband signals. These baseband signals, or IF (Intermediate Frequency) signals, are amplified and transferred in a plurality of channels to an Analog Digital Converter (ADC) arrangement which is arranged to convert the received analog signals to digital signals. The digital signals are used for retrieving an azimuth angle of possible targets by simultaneously sampling and analyzing phase and amplitude of the received signals. The analysis is generally performed in one or more Digital Signal Processors (DSP:s) by means of Fast Fourier Transform (FFT) processing.

A vehicle radar system may be used for detecting other vehicles, fixed objects and pedestrians, where pedestrian protection will become of an increased importance. For detection of pedestrians, a radar system should be able to detect objects such as pedestrians at a sufficient distance and to classify detected objects as pedestrians if that is the case, being able to resolve a pedestrian from clutter.

Having two transmitting antenna arrays means that when they are activated with a time offset, a so-called synthetic aperture can be produced which is greater than the real aperture, enabling so called synthetic aperture radar (SAR). The receiving antenna aperture may be twice as great as the real aperture with two transmitting antenna arrays.

A SAR is described in US 2014/0306840, where one example discloses a distance D between the phase centre of the outermost receiving antennas, and where the two transmitting antennas are arranged a distance D+dx apart, where dx is the distance between the phase centers of two adjacent receiving antennas. The resulting synthetic aperture has no overlapping antenna elements, presenting an efficient use of the antenna aperture.

A phase difference caused by the relative movement and the time shift between the frequency ramps of the transmitters can be eliminated by calculating a phase difference between receiving antennas in a previously known manner, which results in a correction factor that will be used to eliminate the Doppler phase shift on the receiving antennas. This single value is only correct for targets with the exact same Doppler in this Range-Doppler cell, i.e. for overlapping antenna elements. However, correction factors of this kind cannot be obtained from signals from non-overlapping antennas; instead US 2014/0306840 suggests a speed-dependent Doppler correction for compensating for phase shift of the received signals incurred by object movement. The phase shift can be calculated from the known time offset between activation of the left and the right transmitter, and the object speed.

However, this arrangement suffers from possible angle distortion due to the object's movement between activation of the left and the right transmitter, and the Doppler Nyquist is limited to the transmission time of an individual antenna.

It is thus a desire to provide a vehicle radar system where the antenna aperture is efficiently used, while a reliable compensation for phase shift due to object movement is obtained.

The object of the present disclosure is thus to provide a vehicle radar system where the antenna aperture is efficiently used, while a reliable compensation for phase shift due to object movement is obtained.

The present invention is defined by the features of the appended claims. This object is obtained by means of a vehicle radar system comprising at least one transceiver arrangement arranged to generate and transmit two FMCW (Frequency Modulated Continuous Wave) chirp signals comprising frequency ramp signals. The vehicle radar system comprises at least two transmitter antenna arrangements and at least one receiver antenna arrangement arranged to receive signals reflected from an object. At least one transmitter antenna arrangement is arranged to be activated to transmit a first chirp signal at first times and at least one other spatially separated transmitter antenna arrangement is arranged to be activated to transmit a second chirp signal at second times. The transmitter antenna arrangements are activated in an interleaved and repeated manner such that a synthetic aperture is obtained for the received signals.

Furthermore, the vehicle radar system is arranged to calculate:

- a first velocity compensation factor $V_{C1}$ for object movement from measured speed according to:

$$V_{c1} = \frac{4 \cdot \pi \cdot v_{target} \cdot (t_r + t_D)}{\lambda},$$

where $v_{target}$ is the object's speed, $t_r$ is the duration time for a frequency ramp and $t_D$ is a delay time between two consecutive frequency ramps; and

- a second velocity compensation factor $V_{C2}$ for object movement from measured speed according to:

$$V_{c2} = \frac{4 \cdot \pi \cdot v_{target} \cdot (t_r + t_D)}{\lambda} + \pi.$$

The vehicle radar system is further arranged to choose the azimuth angle that has the highest signal integration gain.

This object is also obtained by means of a method for a vehicle radar system, where the method comprises:

Activating at least one transmitter antenna arrangement to transmit a first FMCW (Frequency Modulated Continuous Wave) chirp signal 4a at first times.
Activating at least one other spatially separated transmitter antenna arrangement to transmit a second chirp signal at second times in an interleaved and repeated manner such that a synthetic aperture is obtained for received signals reflected from an object. Each chirp signal comprises a corresponding plurality of frequency ramps.

The method furthermore comprises:

Calculating a first velocity compensation factor $V_{C1}$ for object movement from measured speed according to:

$$V_c = \frac{4 \cdot \pi \cdot v_{target} \cdot (t_r + t_D)}{\lambda},$$

where $v_{target}$ is the object's speed, $t_r$ is the duration time for a frequency ramp and $t_D$ is a delay time between two consecutive frequency ramps.
Calculating a second velocity compensation factor $V_{c2}$ for object movement from measured speed according to:

$$V_{c2} = \frac{4 \cdot \pi \cdot v_{target} \cdot (t_r + t_D)}{\lambda} + \pi.$$

Choosing the azimuth angle that has the highest signal integration gain.

According to an example, each chirp signal comprises a corresponding plurality of frequency ramps that are timed such that between two consecutive frequency ramps of the first chirp signal there is a frequency ramp of the second chirp signal and vice versa such that the chirp signals are interleaved with each other.

According to another example, said transceiver arrangement is arranged to:

- mix the received signals with the respective transmitted chirp signal to obtain at least one IF (Intermediate Frequency) signal;
- convert said IF signals to digital signals;
- convert the digital signals to a range domain by means of a first FFT (Fast Fourier Transform); and to
- combine the results from successive chirp signal frequency ramps into the Doppler domain by means of a second FFT, such that a plurality of Range-Doppler matrices is obtained.

Other examples are disclosed in the dependent claims.

A number of advantages are obtained by means of the present disclosure. Mainly, the antenna aperture is efficiently used, while a reliable compensation for phase shift due to object movement is obtained. More specifically, the following is obtained:

- The advantage of the increased aperture for an improved bearing quality.
- An increased Doppler resolution by increasing the time $T_{1(1)}$ to $T_{1(N)}$ and $T_{2(1)}$ to $T_{2(N)}$ by interleaving the chirp signals 4a and 4b.

- An increased Doppler Nyquist by a factor of two because of the bearing dependent selection of the velocity correction factor with the higher signal integration gain.

BRIEF DESCRIPTION OF THE DRAWINGS

The present disclosure will now be described more in detail with reference to the appended drawings, where:

Figure 1    shows a schematic top view of a vehicle;

Figure 2    shows a simplified schematic of a vehicle radar system;

Figure 3    schematically illustrates how a synthetic antenna aperture is accomplished;

Figure 4    shows two chirp signals; and

Figure 5    shows a flowchart for methods according to the present disclosure.

DETAILED DESCRIPTION

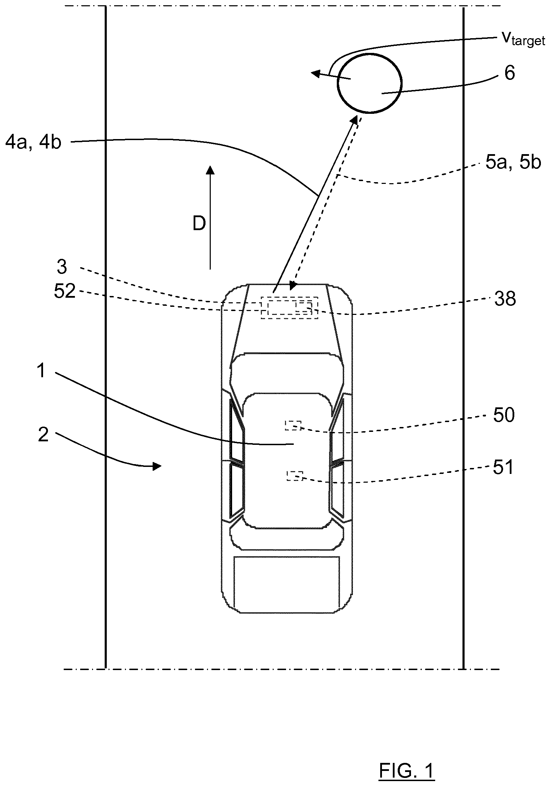

Figure 1 schematically shows a top view of a vehicle 1 arranged to run on a road 2 in a direction D, where the vehicle 1 comprises a vehicle radar system 3 which is arranged to distinguish and/or resolve single targets from the surroundings by transmitting signals 4a, 4b and receiving reflected signals 5a, 5b and using a Doppler effect in a previously well-known manner. The vehicle radar system 3 is arranged to provide azimuth angles of possible objects 6 by simultaneously sampling and analyzing phase and amplitude of the received signals 5a, 5b.

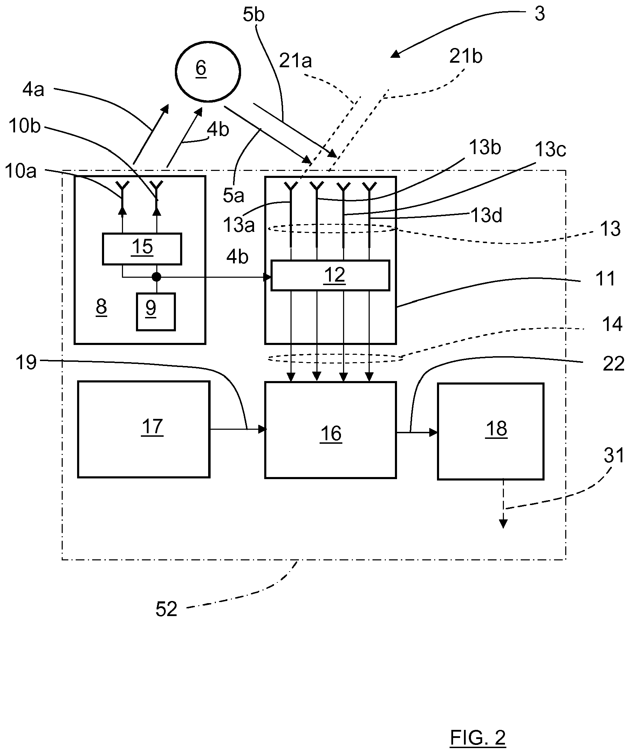

With reference to both Figure 1 and Figure 2, Figure 2 showing a simplified schematic of a vehicle radar system 3 according to a first example, the vehicle radar system 3 comprises transceiver arrangement 52 that in turn comprises a transmitter arrangement 8 which in turn comprises a signal generator 9 that is arranged to generate FMCW (Frequency Modulated Continuous Wave) chirp signals of a previously known kind, comprising frequency ramps, a chirp signal being in the form of a continuous sinusoid where the frequency varies from a first low frequency to a second high frequency over the course of each ramp. The change in frequency from start to finish may for example be of the order of 0.5% of the starting frequency.

The transmitter arrangement 8 further comprises a first transmitter antenna arrangement 10a and a second transmitter antenna arrangement 10b, each transmitter antenna arrangement 10a, 10b either being constituted by one antenna element or by an array of antenna elements, and being arranged to transmit a corresponding first chirp signal 4a and second chirp signal 4b.

The transceiver arrangement 52 further comprises a receiver arrangement 11, which receiver arrangement 11 in turn comprises a receiver mixer 12 and a receiver antenna array 13, where the receiver antenna array 13 comprises four receiver antenna arrangements 13a, 13b, 13c, 13d. In the same way as for the transmitter antenna arrangements, each receiver antenna arrangement 13a, 13b, 13c, 13d may be constituted by one antenna element or by an array of antenna elements.

The transmitted signals 4a, 4b are reflected at a first object 6, and the reflected signals 5a, 5b are received by the receiver arrangement 11 via the receiver antenna arrangements 13a, 13b, 13c, 13d. The reflected signals 5a, 5b each have corresponding wave fronts 21a, 21b, one wave front for each reflected signals 5a, 5b being schematically indicated in Figure 2. By detecting the phases of the received reflected signals 5a, 5b, the inclination of the wave fronts 21a, 21b may be calculated, providing an azimuth bearing angle to the object 6, in other words a direction of arrival DOA.

The received signals 5a, 5b, thus constituted by reflected radar echoes, are mixed with the second chirp signal 4b in the receiver mixer 12, such that four corresponding IF (Intermediate Frequency) signals 14 are acquired. The difference frequency of the resulting IF signals relates to the target distance.

The transceiver arrangement 52 further comprises an Analog to Digital Converter (ADC) arrangement 16 and a sampling and timing arrangement 17. The four corresponding IF signals 14 are transmitted from the receiver to the ADC arrangement 16 where the IF signals 14 are sampled at a certain predetermined sampling frequency $f_s$ and converted to digital signals 22, the sampling frequency $f_s$ being provided in the form of a sampling and timing signal 19 produced by the sampling and timing arrangement 17.

The transceiver arrangement 52 further comprises a DSP (Digital Signal Processor) arrangement 18 that is adapted for radar signal processing by means of a first FFT (Fast Fourier Transform) to convert the digital signals 22 to a range domain, and a second FFT to combine the results from successive chirp signal ramps into the Doppler domain. The two-dimensional spectrum of the Range-Doppler matrices that results are forwarded for further processing as indicated with a dashed arrow 31. The vehicle radar system 3 suitably comprises a main control unit 38 that is arranged to control the working of certain components in the vehicle radar system 3.

In order to increase the receiving antenna aperture, the two transmitter antenna arrangements 10a, 10b are activated with a time offset. In this way, a so-called synthetic aperture can be produced which is greater than the real aperture, enabling so called synthetic aperture radar (SAR). The receiving antenna aperture will be twice as great as the real aperture using the two transmitting antenna arrangements 10a, 10b in this manner as will be described more in detail below.

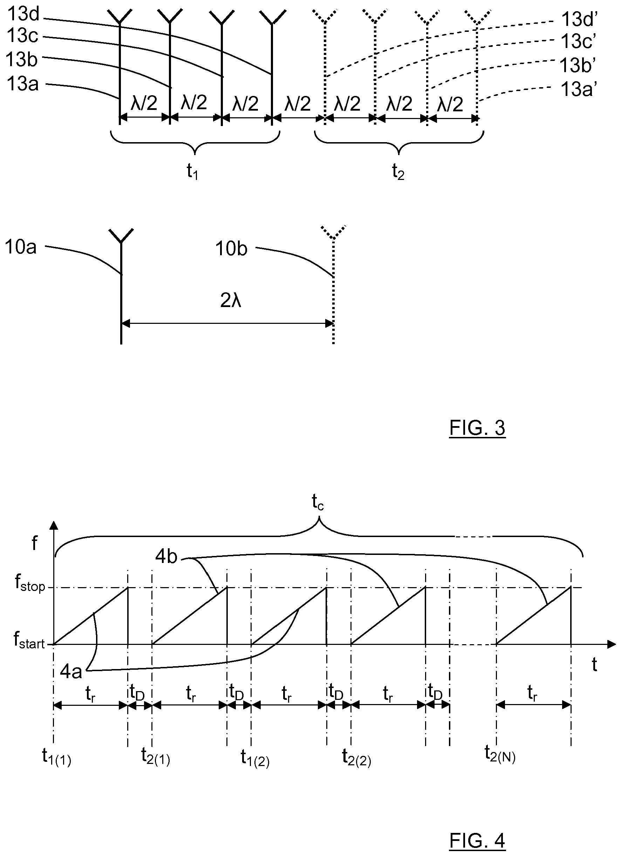

With reference to Figure 3, the first transmitter antenna arrangement 10a and the second transmitter antenna arrangement 10b have phase centers that are positioned at a distance of $2\lambda$ from each other where $\lambda$ denotes the wavelength of the center frequency of the frequency band used. The receiver antenna arrangements 13a, 13b, 13c, 13d have phase centers that are positioned at a distance of $2\lambda$ from each other for adjacent receiver antenna arrangements 13a, 13b, 13c, 13d such that the phase centers of the outermost receiver antenna arrangements 13a, 13d are positioned at a distance of $1.5\lambda$ from each other.

The first transmitter antenna arrangement 10a is activated at first times $t_{1(n)}$ (n = 1 ... N), where N is the number of frequency ramps in a cycle of the first chirp signal 4a, such that the receiver antenna arrangements 13a, 13b, 13c, 13d are used for receiving reflected signals at a first position where they are indicated with solid lines. The second transmitter antenna arrangement 10b, shown with dotted lines, is activated at second times $t_{2(n)}$ (n = 1 ... N), where N is the number of frequency ramps in a cycle of the second chirp signal 4b, such that the receiver antenna arrangements 13a', 13b', 13c', 13d' are used for receiving reflected signals at a second position where they are indicated with dotted lines. Between the first position and the second position there is a distance of $2\lambda$, such that a synthetic aperture that is twice as great as the real aperture is obtained. The transmitter antenna arrangements 10a, 10b are activated repeatedly in an interleaved manner as will be described more in detail below.

As shown in Figure 4, the first chirp signal 4a and the second chirp signal 4b are shown in the same graph with frequency on the Y-axis and time on the X-axis. The frequency varies from a first frequency $f_{start}$ to a second frequency $f_{stop}$ over the course of each ramp, where the magnitude of the first frequency $f_{start}$ falls below the magnitude of the second frequency $f_{stop}$. The first chirp signal 4a comprises repeating cycles of a first plurality of frequency ramps and the second chirp signal 4b comprises repeating cycles of a second plurality of frequency ramps where each cycle has a duration of a cycle time $t_c$.

According to the present disclosure, each ramp lasts a certain ramp time $t_r$, the ramp time $t_r$ being the same for the first chirp signal 4a and the second chirp signal 4b. Between two consecutive ramps of the first chirp signal 4a as well as for the second chirp signal 4b there is a ramp time $t_r$ and a delay time $t_D$. The chirp signals 4a, 4b are timed such that between two consecutive ramps of the first chirp signal 4a there is a ramp of the second chirp signal 4b and vice versa such that the chirp signals 4a, 4b are interleaved with each other, the delay time $t_D$ occurring between two consecutive ramps of one chirp signal and the other chirp signal.

The transmitter arrangement 8 comprises a signal output handling device 15 that is arranged to control the delays necessary for obtaining chirp signals 4a, 4b that are interleaved with each other. Such a device 15 may comprise a phase delay and/or a switching device. The interleaving may of course be obtained in many other suitable ways, apparent for the skilled person, for example by using any type of channel selection device.

For example, each cycle comprises 128 ramps in total, where 1024 samples are taken per ramp. Since there is already information about Doppler, retrieved after the second FFT, this can be used to eliminate the phase shift of the received signals incurred by object movement. However, phase shift is ambiguous because the time between two consecutive ramps of the two transmitter antenna arrangements 10a 10b antennas is half the time of the sampling rate the Doppler signal.

A first velocity compensation factor $V_{C1}$ for object movement is therefore first calculated directly from the measured speed according to:

$$V_{c1} = \frac{4 \cdot \pi \cdot v_{target} \cdot (t_r + t_D)}{\lambda},$$

where $v_{target}$ is the object's speed.

The object's speed is calculated from the range Doppler signals, the first chirp signal 4a and the second chirp signal 4b, independently. This signal has a sampling rate of $t_{1(1)}$ to $t_{1(2)}$ or $2*(t_r+t_D)$. The first velocity compensation factor $V_{C1}$ is to correct the phase shift based on Doppler from $t_{1(1)}$ to $t_{2(1)}$ or $1*(t_r+t_D)$. The time $T_{1(1)}$ to $T_{2(1)}$ is half as long as $T_{1(1)}$ to $t_{1(2)}$. Therefore, the calculated object speed $V_{target}$ is ambiguous, and a second velocity compensation factor $V_{C2}$ for object movement has to be calculated directly from the measured speed according to:

$$V_{c2} = \frac{4 \cdot \pi \cdot v_{target} \cdot (t_r + t_D)}{\lambda} + \pi.$$

The two different velocity compensation factors $V_{C2}$ result in a two different combinations of the chirp signals 4a and 4b. This results in two possible azimuth angles which are directly linked to a Doppler hypothesis. The azimuth angle which has the highest signal integration gain is chosen.

For example, this achieves:

1) An advantage of an increased antenna aperture for an improved bearing quality.

2) An increased Doppler resolution by increasing the time $T_{1(1)}$ to $T_{1(N)}$ and $T_{2(1)}$ to $T_{2(N)}$ by interleaving the chirp signals 4a and 4b.

3) An increased Doppler Nyquist by a factor of two because of the bearing dependent selection of the velocity correction factor with the higher signal integration gain.

Exactly how this is accomplished may vary, the example disclosed above is only an example, and the processing may be performed in the main control unit 38 which in turn may be comprised by one or more separate or integrated control units. There may be one main control unit 38 for each transceiver arrangement 52, or one main control unit 38 for the vehicle radar system 3.

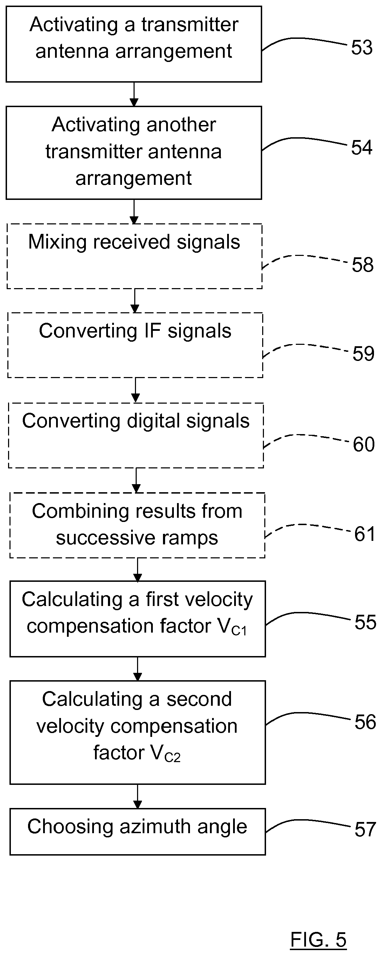

With reference to Figure 5, the present disclosure also relates to a method for a vehicle radar system (3), where the method comprises:

53: Activating at least one transmitter antenna arrangement 10a to transmit a first FMCW (Frequency Modulated Continuous Wave) chirp signal 4a at first times $t_{1(n)}$.

54: Activating at least one other spatially separated transmitter antenna arrangement 10b to transmit a second chirp signal 4b at second times $t_{2(n)}$ in an interleaved and repeated manner such that a synthetic aperture is obtained for received signals 5a, 5b reflected from an object 6, where each chirp signal 4a, 4b comprises a corresponding plurality of frequency ramps.

55: Calculating a first velocity compensation factor $V_{C1}$ for object movement from measured speed according to:

$$V_c = \frac{4 \cdot \pi \cdot v_{target} \cdot (t_r + t_D)}{\lambda},$$

where $v_{target}$ is the object's speed, $t_r$ is the duration time for a frequency ramp and $t_D$ is a delay time between two consecutive frequency ramps.

56: Calculating a second velocity compensation factor $V_{c2}$ for object movement from measured speed according to:

$$V_{c2} = \frac{4 \cdot \pi \cdot v_{target} \cdot (t_r + t_D)}{\lambda} + \pi.$$

57: Choosing the azimuth angle that has the highest signal integration gain.

According to an example, the method further comprises:

58: Mixing the received signals 5a, 5b with the respective transmitted chirp signal 4a, 4b to obtain at least one IF (Intermediate Frequency) signal 14.

59: Converting said IF signals 14 to digital signals 22.

60: Converting the digital signals 22 to a range domain by means of a first FFT (Fast Fourier Transform).

61: Combining the results from successive chirp signal frequency ramps into the Doppler domain by means of a second FFT such that a plurality of Range-Doppler matrices is obtained.

As indicated in Figure 1, the vehicle 1 comprises a safety control unit 50 and safety means 51, for example an emergency braking system and/or an alarm signal device. The safety control unit 50 is arranged to control the safety means 51 in dependence of input from the radar system 3. Such input may be input via the main control unit 38.

The present disclosure is not limited to the examples above, but may vary freely within the scope of the appended claims. For example, the ramp time $t_r$ does not have to be the same for the first chirp signal 4a and the second chirp signal 4b.

All times mentioned are of course only mentioned by way of example, any suitable times and timing schedules are clearly possible in a radar system according to the above. The ramp may similarly be configured as an up-ramp as described, or a down-ramp, or some combination of both. The magnitude of the first frequency $f_{start}$ may thus exceed the magnitude of the second frequency $f_{stop}$. Triangular ramps or other suitable shapes are conceivable.

Furthermore, there may be any number of transmitter antenna arrangements 10a, 10b and receiver antenna arrangements 13a, 13b, 13c, 13d, but there is at least two transmitter antenna arrangements and at least one receiver antenna arrangement in order to accomplish a SAR.

Each antenna arrangement 10a, 10b; 13a, 13b, 13c, 13d may for example comprise on or more antennas, and each antenna may be constituted by one antenna element or by an array of antenna elements.

The radar system may be implemented in any type of vehicle such as cars, trucks and buses as well as boats and aircraft.

The schematics of vehicle radar systems are simplified, only showing parts that are considered relevant for an adequate description of the present disclosure. It is understood that the general design of radar systems of this kind is well-known in the art.

For example, no signal amplifying and filter arrangements have been shown at the transmitter arrangement 8, or the receiver arrangement 11, but such transmitter and filter arrangements are normally of course placed in suitable positions at the transmitter arrangement 8 and/or the receiver arrangement 11. An anti-aliasing filter is for example often used in the receiver arrangement 11.

Furthermore, no devices that are arranged to use the acquired target information are shown, but many different such devices are of course conceivable; for example a warning and/or collision avoidance system.

The number of antenna arrangements, antennas within each antenna arrangement and IF signals may vary.

The ADC arrangement and the DSP arrangement should each one be interpreted as having a corresponding ADC or DSP functionality, and may each be constituted by a plurality of separate components. Alternatively, each ADC arrangement may be comprised in one ADC chip, and each DSP arrangement may be comprised in one DSP chip.

Generally, the hardware used to generate the radar signal may be active only for part of the cycle period and powered down for the rest of the cycle, i.e. when it is not needed.

The vehicle radar system 3 has been shown having one transceiver arrangement 52; of course the vehicle radar system 3 may comprise two or more transceiver arrangement having the same or different structures, comprising similar or different components. Each transceiver arrangement 52 may comprise control units.

There does not need to be any delay time $t_D$.

## Claims

1. A vehicle radar system (3) comprising at least one transceiver arrangement (52) arranged to generate and transmit two FMCW, Frequency Modulated Continuous Wave, chirp signals (4a, 4b) comprising corresponding frequency ramps, where the vehicle radar system (3) comprises at least two transmitter antenna arrangements (10a, 10b) and at least one receiver antenna arrangement (13a 13b, 13c, 13d) arranged to receive signals (5a, 5b) reflected from an object (6), where at least one transmitter antenna arrangement (10a) is arranged to be activated to transmit a first chirp signal (4a) at first times ($t_{1(n)}$) and at least one other spatially separated transmitter antenna arrangement (10b) is arranged to be activated to transmit a second chirp signal (4b) at second times ($t_{2(n)}$), the transmitter antenna arrangements (10a, 10b) being activated in an interleaved and repeated manner such that a synthetic aperture is obtained for the received signals (5a, 5b), where said transceiver arrangement (52) is arranged to:

   - mix the received signals (5a, 5b) with the respective transmitted chirp signal (4a, 4b) to obtain at least one IF, Intermediate Frequency, signal (14);
   - convert said IF signals (14) to digital signals (22);
   - convert the digital signals (22) to a range domain by means of a first FFT, Fast Fourier Transform; and to
   - combine the results from successive chirp signal frequency ramps into the Doppler domain by means of a second FFT, such that a plurality of Range-Doppler matrices is obtained

   **characterized in that** the vehicle radar system (3) further is arranged to calculate:

   - a first velocity compensation factor $V_{C1}$ for object movement from measured speed according to:

$$V_{c1} = \frac{4 \cdot \pi \cdot v_{target} \cdot \left(t_r + t_D\right)}{\lambda},$$

where $v_{target}$ is the object's speed, $t_r$ is the duration time for a frequency ramp and $t_D$ is a delay time between two consecutive frequency ramps; and
- a second velocity compensation factor $V_{C2}$ for object movement from measured speed according to:

$$V_{c2} = \frac{4 \cdot \pi \cdot v_{target} \cdot \left(t_r + t_D\right)}{\lambda} + \pi,$$

where the two different velocity compensation factors $V_{C1}$, $V_{C2}$ result in two different combinations of the chirp signals (4a, 4b), which in turn results in two possible azimuth angles, where the vehicle radar system (3) further is arranged to choose the azimuth angle that has the highest signal integration gain.

2. A vehicle radar system (3) according to claim 1, **characterized in that** each chirp signal (4a, 4b) comprises a corresponding plurality of frequency ramps that are timed such that between two consecutive frequency ramps of the first chirp signal (4a) there is a frequency ramp of the second chirp signal (4b) and vice versa such that the chirp signals (4a, 4b) are interleaved with each other.

3. A vehicle radar system (3) according to any one of the previous claims, **characterized in that** the radar system (3) is arranged to provide input to a safety control unit (35) that in turn is arranged to control safety means (36), where the radar system (3), the safety control unit (35) and the safety means (36) are comprised in a vehicle (1).

4. A method for a vehicle radar system (3), where the method comprises:

(53) activating at least one transmitter antenna arrangement (10a) to transmit a first FMCW, Frequency Modulated Continuous Wave, chirp signal (4a) at first times ($t_{1(n)}$);
(54) activating at least one other spatially separated transmitter antenna arrangement (10b) to transmit a second chirp signal (4b) at second times ($t_{2(n)}$) in an interleaved and repeated manner such that a synthetic aperture is obtained for received signals (5a, 5b) reflected from an object (6), where each chirp signal (4a, 4b) comprises a corresponding plurality of frequency ramps,
(58) mixing the received signals (5a, 5b) with the respective transmitted chirp signal (4a, 4b) to obtain at least one IF, Intermediate Frequency, signal (14);
(59) converting said IF signals (14) to digital signals (22);
(60) converting the digital signals (22) to a range domain by means of a first FFT, Fast Fourier Transform; and
(61) combining the results from successive chirp signal frequency ramps into the Doppler domain by means of a second FFT such that a plurality of Range-Doppler matrices is obtained, **characterized in that** the method further comprises:

(55) calculating a first velocity compensation factor $V_{C1}$ for object movement from measured speed according to:

$$V_c = \frac{4 \cdot \pi \cdot v_{target} \cdot \left(t_r + t_D\right)}{\lambda},$$

where $v_{target}$ is the object's speed, $t_r$ is the duration time for a frequency ramp and $t_D$ is a delay time between two consecutive frequency ramps; and
(56) calculating a second velocity compensation factor $V_{c2}$ for object movement from measured speed according to:

$$V_{c2} = \frac{4 \cdot \pi \cdot v_{target} \cdot \left(t_r + t_D\right)}{\lambda} + \pi,$$

where the two different velocity compensation factors $V_{C1}$, $V_{C2}$ result in two different combinations of the chirp signals (4a, 4b), which in turn results in two possible azimuth angles, where the method also comprises: (57) choosing the azimuth angle that has the highest signal integration gain.

5. A method according to claim 4, **characterized in that** each chirp signal (4a, 4b) uses a corresponding plurality of frequency ramps, where the method comprises timing each chirp signal (4a, 4b) such that between two consecutive frequency ramps of the first chirp signal (4a) there is a frequency ramp of the second chirp signal (4b) and vice versa such that the chirp signals (4a, 4b) are interleaved with each other.

## Patentansprüche

1. Radarsystem (3) eines Fahrzeugs, das mindestens eine Transceiveranordnung (52) umfasst, die so angeordnet ist, dass sie zwei frequenzmodulierte Dauerstrich-Chirpsignale (FMCW, Frequency Modulated Continuous Wave) (4a, 4b) erzeugt und aussendet, die entsprechende Frequenzrampen umfassen, wobei das Radarsystem (3) eines Fahrzeugs mindestens zwei Sendeantennenanordnungen (10a, 10b) und mindestens eine Empfangsantennenanordnung (13a 13b, 13c, 13d), die so angeordnet ist, dass sie Signale (5a, 5b) empfängt, die von einem Objekt (6) reflektiert werden, wobei mindestens eine Sendeantennenanordnung (10a) so angeordnet ist, dass sie aktiviert wird, damit sie ein erstes Chirpsignal (4a) zu ersten Zeitpunkten ($t_{1(n)}$) aussendet und mindestens eine weitere, räumlich getrennte Sendeantennenanordnung (10b) so angeordnet ist, dass sie aktiviert wird, damit sie ein zweites Chirpsignal (4b) zu zweiten Zeitpunkten ($t_{2(n)}$) aussendet, wobei die Sendeantennenanordnungen (10a, 10b) verschachtelt und wiederholt derart aktiviert werden, dass für die empfangenen Signale (5a, 5b) eine synthetische Apertur erhalten wird, wobei die Transceiveranordnung (52) so angeordnet ist, dass sie:

- die empfangenen Signale (5a, 5b) mit dem jeweiligen ausgesendeten Chirpsignal (4a, 4b) mischt, damit mindestens ein Zwischenfrequenzsignal (IF(intermediate frequency)-Signal) (14) erhalten wird;
- die IF-Signale (14) in digitale Signale (22) umwandelt;
- die digitalen Signale (22) mit einer ersten schnellen Fourier-Transformation (Fast Fourier Transform, FFT) in eine Entfernungsdomäne umwandelt; und dass sie
- die Ergebnisse von aufeinanderfolgenden Chirpsignal-Frequenzrampen mit einer zweiten FFT in die Dopplerdomäne zusammenführt, sodass eine Vielzahl von Entfernung-Doppler-Matrizen erhalten wird,

**dadurch gekennzeichnet, dass** das Radarsystem (3) eines Fahrzeugs ferner so angeordnet ist, dass es:

- einen ersten Geschwindigkeitskompensationsfaktor $V_{c1}$ für die Objektbewegung aus der gemessenen Geschwindigkeit gemäß:

$$V_{c1} = \frac{4 \cdot \pi \cdot v_{target} \cdot (t_r + t_D)}{\lambda}$$

berechnet, wobei $V_{target}$ die Geschwindigkeit des Objekts, $t_r$ die Zeitdauer für eine Frequenzrampe und $t_D$ eine Verzögerungszeit zwischen zwei aufeinanderfolgenden Frequenzrampen ist; und
- einen zweiten Geschwindigkeitskompensationsfaktor $V_{c2}$ für die Objektbewegung aus der gemessenen Geschwindigkeit gemäß:

$$V_{c2} = \frac{4 \cdot \pi \cdot v_{target} \cdot (t_r + t_D)}{\lambda} + \pi$$

berechnet, wobei die beiden unterschiedlichen Geschwindigkeitskompensationsfaktoren $V_{c1}$, $V_{c2}$ zwei unterschiedliche Kombinationen der Chirpsignale (4a, 4b) ergeben, die wiederum zwei mögliche Azimutwinkel ergeben, wobei das Radarsystem (3) eines Fahrzeugs ferner so angeordnet ist, dass es den Azimutwinkel auswählt, der die höchste Signalintegrationsverstärkung aufweist.

2. Radarsystem (3) eines Fahrzeugs nach Anspruch 1, **dadurch gekennzeichnet, dass** jedes Chirpsignal (4a, 4b) eine entsprechende Vielzahl von Frequenzrampen umfasst, die zeitlich derart gesteuert sind, dass zwischen zwei aufeinanderfolgenden Frequenzrampen des ersten Chirpsignals (4a) eine Frequenzrampe des zweiten Chirpsignals (4b) und umgekehrt liegt, sodass die Chirpsignale (4a, 4b) ineinander verschachtelt sind.

**3.** Radarsystem (3) eines Fahrzeugs nach einem der vorhergehenden Ansprüche, **dadurch gekennzeichnet, dass** das Radarsystem (3) so angeordnet ist, dass es einer Sicherheitssteuerungseinheit (35) Eingangsdaten liefert, die wiederum so angeordnet ist, dass sie Sicherheitsmittel (36) steuert, wobei das Radarsystem (3), die Sicherheitssteuerungseinheit (35) und die Sicherheitsmittel (36) in einem Fahrzeug (1) enthalten sind.

**4.** Verfahren für ein Radarsystem (3) eines Fahrzeugs, wobei das Verfahren umfasst:

(53) Aktivieren mindestens einer Sendeantennenanordnung (10a), damit sie ein erstes frequenzmoduliertes Dauerstrich-Chirpsignal (FMCW, Frequency Modulated Continuous Wave) (4a) zu ersten Zeitpunkten ($t_{1(n)}$) aussendet;

(54) Aktivieren mindestens einer weiteren räumlich getrennten Sendeantennenanordnung (10b), damit sie ein zweites Chirpsignal (4b) zu zweiten Zeitpunkten ($t_{2(n)}$) verschachtelt und wiederholt derart aussendet, dass eine synthetische Apertur für die empfangenen Signale (5a, 5b) erhalten wird, die von einem Objekt (6) reflektiert werden, wobei jedes Chirpsignal (4a, 4b) eine entsprechende Vielzahl von Frequenzrampen umfasst,

(58) Mischen der empfangenen Signale (5a, 5b) mit dem jeweiligen ausgesendeten Chirpsignal (4a, 4b), damit mindestens ein Zwischenfrequenzsignal (IF(intermediate frequency)-Signal) (14) erhalten wird;

(59) Umwandeln der IF-Signale (14) in digitale Signale (22);

(60) Umwandeln der digitalen Signale (22) mit einer ersten schnellen Fourier-Transformation (Fast Fourier Transform, FFT) in eine Entfernungsdomäne; und

(61) Zusammenführen der Ergebnisse von aufeinanderfolgenden Chirpsignal-Frequenzrampen in die Dopplerdomäne mit einer zweiten FFT, sodass eine Vielzahl von Entfernung-Doppler-Matrizen erhalten wird, **dadurch gekennzeichnet, dass** das Verfahren ferner umfasst:

(55) Berechnen eines ersten Geschwindigkeitskompensationsfaktors $V_{c1}$ für die Objektbewegung aus der gemessenen Geschwindigkeit gemäß:

$$V_c = \frac{4 \cdot \pi \cdot v_{target} \cdot (t_r + t_D)}{\lambda},$$

wobei $V_{target}$ die Geschwindigkeit des Objekts, $t_r$ die Zeitdauer für eine Frequenzrampe und $t_D$ eine Verzögerungszeit zwischen zwei aufeinanderfolgenden Frequenzrampen ist; und

(56) Berechnen eines zweiten Geschwindigkeitskompensationsfaktors $V_{c2}$ für die Objektbewegung aus der gemessenen Geschwindigkeit gemäß:

$$V_{c2} = \frac{4 \cdot \pi \cdot v_{target} \cdot (t_r + t_D)}{\lambda} + \pi,$$

wobei die beiden unterschiedlichen Geschwindigkeitskompensationsfaktoren $V_{c1}$, $V_{c2}$ zwei unterschiedliche Kombinationen der Chirpsignale (4a, 4b) ergeben, die wiederum zwei mögliche Azimutwinkel ergeben, wobei das Verfahren auch umfasst:

(57) Auswählen des Azimutwinkels, der die höchste Signalintegrationsverstärkung aufweist.

**5.** Verfahren nach Anspruch 4, **dadurch gekennzeichnet, dass** jedes Chirpsignal (4a, 4b) eine entsprechende Vielzahl von Frequenzrampen nutzt, wobei das Verfahren ein zeitliches Steuern jedes Chirpsignals (4a, 4b) umfasst, sodass zwischen zwei aufeinanderfolgenden Frequenzrampen des ersten Chirpsignals (4a) eine Frequenzrampe des zweiten Chirpsignals (4b) und umgekehrt liegt, sodass die Chirpsignale (4a, 4b) ineinander verschachtelt sind.

**Revendications**

**1.** Système de radar (3) de véhicule comprenant au moins un agencement émetteur-récepteur (52) conçu pour générer et émettre deux signaux chirp (4a, 4b) d'onde continue à fréquence modulée, FMCW (Frequency Modulated Continuous Wave), comprenant des rampes de fréquence correspondantes, le système de radar (3) de véhicule comprenant au moins deux agencements d'antenne d'émission (10a, 10b) et au moins un agencement d'antenne de réception (13a, 13b, 13c, 13d) conçu pour recevoir des signaux (5a, 5b) réfléchis par un objet (6), au moins un agencement d'antenne d'émission (10a) étant conçu pour être activé afin d'émettre un premier signal chirp (4a) à

des premiers moments ($t_{1(n)}$) et au moins un autre agencement d'antenne d'émission (10b) séparé dans l'espace étant conçu pour être activé afin d'émettre un second signal chirp (4b) à des seconds moments ($t_{2(n)}$), les agencements d'antenne d'émission (10a, 10b) étant activés de manière entrelacée et répétée de sorte qu'une synthèse d'ouverture est obtenue pour les signaux (5a, 5b) reçus, ledit agencement émetteur-récepteur (52) étant conçu pour :

- mélanger les signaux (5a, 5b) reçus avec le signal chirp (4a, 4b) émis respectif pour obtenir au moins un signal de fréquence intermédiaire, IF (Intermediate Frequency), (14) ;
- convertir lesdits signaux IF (14) en signaux numériques (22) ;
- convertir les signaux numériques (22) dans un domaine de distance au moyen d'une première transformation de Fourier rapide, FFT (Fast Fourier Transform) ; et pour
- combiner les résultats de rampes de fréquence successives de signal chirp dans le domaine Doppler au moyen d'une seconde FFT, de telle sorte qu'une pluralité de matrices distance/Doppler est obtenue,

**caractérisé en ce que** le système de radar (3) de véhicule est en outre conçu pour calculer :

- un premier facteur de compensation de vitesse $V_{c1}$ pour le déplacement de l'objet à partir de la vitesse mesurée selon :

$$V_{c1} = \frac{4 \cdot \pi \cdot v_{target} \cdot (t_r + t_D)}{\lambda},$$

où $V_{target}$ est la vitesse de l'objet, $t_r$ est la durée d'une rampe de fréquence et $t_D$ est un délai entre deux rampes de fréquence consécutives ; et
- un second facteur de compensation de vitesse $V_{c2}$ pour le déplacement de l'objet à partir de la vitesse mesurée selon :

$$V_{c2} = \frac{4 \cdot \pi \cdot v_{target} \cdot (t_r + t_D)}{\lambda} + \pi,$$

où les deux différents facteurs de compensation de vitesse $V_{c1}$, $V_{c2}$ aboutissent à deux combinaisons différentes des signaux chirp (4a, 4b), qui pour leur part aboutissent à deux angles d'azimut possibles, le système de radar (3) de véhicule étant en outre conçu pour choisir l'angle d'azimut qui présente le gain d'intégration de signal le plus élevé.

2. Système de radar (3) de véhicule selon la revendication 1, **caractérisé en ce que** chaque signal chirp (4a, 4b) comprend une pluralité correspondante de rampes de fréquence qui sont réglées dans le temps de telle sorte qu'entre deux rampes de fréquence consécutives du premier signal chirp (4a), il y a une rampe de fréquence du second signal chirp (4b) et vice versa, de telle sorte que les signaux chirp (4a, 4b) sont entrelacés l'un avec l'autre.

3. Système de radar (3) de véhicule selon l'une quelconque des revendications précédentes, **caractérisé en ce que** le système de radar (3) est conçu pour fournir des données d'entrée à une unité de commande de sécurité (35), qui pour sa part est conçue pour commander des moyens de sécurité (36), le système de radar (3), l'unité de commande de sécurité (35) et les moyens de sécurité (36) étant compris dans un véhicule (1).

4. Procédé pour un système de radar (3) de véhicule, le procédé comprenant :

(53) l'activation d'au moins un agencement d'antenne d'émission (10a) pour émettre un premier signal chirp (4a) d'onde continue à fréquence modulée, FMCW (Frequency Modulated Continuous Wave), à des premiers moments ($t_{1(n)}$) ;
(54) l'activation d'au moins un autre agencement d'antenne d'émission (10b) séparé dans l'espace pour émettre un second signal chirp (4b) à des seconds moments ($t_{2(n)}$) de manière entrelacée et répétée de telle sorte qu'une synthèse d'ouverture est obtenue pour des signaux (5a, 5b) reçus réfléchis par un objet (6), chaque signal chirp (4a, 4b) comprenant une pluralité correspondante de rampes de fréquence,
(58) le mélange des signaux (5a, 5b) reçus avec le signal chirp (4a, 4b) émis respectif pour obtenir au moins un signal de fréquence intermédiaire, IF (Intermediate Frequency), (14) ;
(59) la conversion desdits signaux IF (14) en signaux numériques (22) ;

(60) la conversion des signaux numériques (22) dans un domaine de distance au moyen d'une première transformation de Fourier rapide, FFT (Fast Fourier Transform) ; et

(61) la combinaison des résultats de rampes de fréquence successives de signal chirp dans le domaine Doppler au moyen d'une seconde FFT, de telle sorte qu'une pluralité de matrices distance/Doppler est obtenue, **caractérisé en ce que** le procédé comprend en outre :

(55) le calcul d'un premier facteur de compensation de vitesse $V_{c1}$ pour le déplacement de l'objet à partir de la vitesse mesurée selon :

$$V_c = \frac{4 \cdot \pi \cdot v_{target} \cdot (t_r + t_D)}{\lambda}.$$

où $v_{target}$ est la vitesse de l'objet, $t_r$ est la durée d'une rampe de fréquence et $t_D$ est un délai entre deux rampes de fréquence consécutives ; et

(56) le calcul d'un second facteur de compensation de vitesse $V_{c2}$ pour le déplacement de l'objet à partir de la vitesse mesurée selon :

$$V_{c2} = \frac{4 \cdot \pi \cdot v_{target} \cdot (t_r + t_D)}{\lambda} + \pi,$$

où les deux différents facteurs de compensation de vitesse $V_{c1}$, $V_{c2}$ aboutissent à deux combinaisons différentes des signaux chirp (4a, 4b), qui pour leur part aboutissent à deux angles d'azimut possibles, le procédé comprenant également :

(57) le choix de l'angle d'azimut qui présente le gain d'intégration de signal le plus élevé.

5. Procédé selon la revendication 4, **caractérisé en ce que** chaque signal chirp (4a, 4b) utilise une pluralité correspondante de rampes de fréquence, le procédé comprenant le réglage dans le temps de chaque signal chirp (4a, 4b) de telle sorte qu'entre deux rampes de fréquence consécutives du premier signal chirp (4a), il y a une rampe de fréquence du second signal chirp (4b) et vice versa, de telle sorte que les signaux chirp (4a, 4b) sont entrelacés l'un avec l'autre.

FIG. 1

FIG. 2

FIG. 3

FIG. 4

```
┌─────────────────────────┐
│   Activating a transmitter │────────── 53
│   antenna arrangement      │
└─────────────────────────┘
            │
            ▼
┌─────────────────────────┐
│   Activating another       │────────── 54
│   transmitter antenna      │
│   arrangement              │
└─────────────────────────┘
            │
            ▼
┌─ ─ ─ ─ ─ ─ ─ ─ ─ ─ ─ ─ ┐
│   Mixing received signals  │─ ─ ─ ─ ─ ─ 58
└─ ─ ─ ─ ─ ─ ─ ─ ─ ─ ─ ─ ┘
            │
            ▼
┌─ ─ ─ ─ ─ ─ ─ ─ ─ ─ ─ ─ ┐
│   Converting IF signals    │─ ─ ─ ─ ─ ─ 59
└─ ─ ─ ─ ─ ─ ─ ─ ─ ─ ─ ─ ┘
            │
            ▼
┌─ ─ ─ ─ ─ ─ ─ ─ ─ ─ ─ ─ ┐
│   Converting digital signals│─ ─ ─ ─ ─ ─ 60
└─ ─ ─ ─ ─ ─ ─ ─ ─ ─ ─ ─ ┘
            │
            ▼
┌─ ─ ─ ─ ─ ─ ─ ─ ─ ─ ─ ─ ┐
│   Combining results from   │─ ─ ─ ─ ─ ─ 61
│   successive ramps         │
└─ ─ ─ ─ ─ ─ ─ ─ ─ ─ ─ ─ ┘
            │
            ▼
┌─────────────────────────┐
│   Calculating a first velocity│────────── 55
│   compensation factor $V_{C1}$ │
└─────────────────────────┘
            │
            ▼
┌─────────────────────────┐
│   Calculating a second     │────────── 56
│   velocity compensation    │
│   factor $V_{C2}$          │
└─────────────────────────┘
            │
            ▼
┌─────────────────────────┐
│   Choosing azimuth angle   │────────── 57
└─────────────────────────┘
```

FIG. 5

**EP 3 147 685 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140306840 A